# EUROPEAN PATENT SPECIFICATION

(11) **EP 0 558 255 B1**
(45) Date of publication and mention of the grant of the patent: **23.07.1997**
(21) Application number: 93301296.5
(22) Date of filing: 23.02.1993
(51) Int. Cl.: H01M 4/36, H01M 6/16, H01M 4/48

(54) **Electrochemical cells with end-of-service indicator**
Elektrochemische Zellen mit Leeranzeige
Cellules électrochimiques avec indicateur de la fin d'usage

(30) Priority: 24.02.1992 US 840224
(43) Date of publication of application: 01.09.1993
(73) Proprietor: MEDTRONIC, INC., Minneapolis, Minnesota 55432-3576 (US)
(72) Inventor: Weiss, Douglas J., Plymouth, Minnesota 55433 (US); Cretzmeyer, John W., Richfield, Minnesota 55423 (US); Crespi, Ann M., Minneapolis, Minnesota 55417 (US); Howard, William G., Roseville, Minnesota 55113 (US); Skarstad, Paul M., Plymouth, Minnesota 55447 (US)
(74) Representative: Pett, Christopher Phineas

(56) References cited:
- GB-A- 2 228 614
- US-A- 4 619 874
- PATENT ABSTRACTS OF JAPAN vol. 9, no. 15 (E-291)22 January 1985
- PATENT ABSTRACTS OF JAPAN vol. 13, no. 401 (E-816)6 September 1989
- Journal of Power Sources 54 (1995) 68-71, A.M. Crespi, et al.
- Lithium Batteries, Ed. J.-P. Gabano, Academic Press, London, 1983

## Description

This invention relates to non-aqueous electrochemical cells having a composite cathode to provide an end-of-service indicator.

### BACKGROUND OF THE INVENTION

The latest generation of medical devices have demanding power requirements such as high rate requirements. Power sources (electrochemical cells, cells or batteries hereinafter) used heretofore for medical applications and other applications have included, for example, cathodes of MnO₂. Such cells have been generally satisfactory and have exhibited only gradually decreasing voltage curves in low rate applications. When utilized in high rate applications however, the gradual discharge ramp is lost and becomes one in which cell service life ends precipitously with a sharp voltage drop off at end-of-service (EOS). This is unsatisfactory and some means is required for signaling the onset of cell depletion or EOS i.e., monitoring for remaining cell service life.

In general, composite electrodes of different potentials to warn of cell depletion are known in battery technology. For example, U.S. Patent Nos. 3,757,793 to Doty and Fester; No. 4,619,874 to Hayes and Skarstad and No. 4,259,415 to Tamura et all relate to composite cathodes.

### SUMMARY OF THE INVENTION

This invention relates to non-aqueous cells employing an active metal anode such as lithium, a liquid organic electrolyte and a cathode comprised of manganese dioxide and/or carbon monofluoride for use in high rate applications in which the cathode also contains an amount of a material selected from the group consisting of the silver vanadates βAgₓV₂O₅, δAgₓV₂O₅ & Ag₂V₄O₁₁, as an end-of-service (EOS) indicator. For βAgₓV₂O₅, the value of x is about 0.29≤x≤0.41; and for δAgₓV₂O₅, the value of x is about 0.67≤x≤0.86. Such cathodes are termed herein "composite cathodes" and provide an EOS function signaling the onset of cell energy depletion in the form of a reduced voltage signal from the cell.

### DESCRIPTION OF PREFERRED EMBODIMENTS

Cells of the general Li/MnO₂ or Li/CFₓ type are known in the art and are described more fully in, for example, U.S. Pat. No. 4,327,166 and U.S. Pat. No. 4,259,415. Briefly, such cells may make use of an anode of lithium, potassium, sodium, calcium, magnesium, aluminum, and alloys thereof (referred to herein as active metals generally). Such cells may make use of a cathode of manganese dioxide (MnO₂), carbon monofluoride (CFₓ) or mixtures thereof. Such cells may make use of an electrolyte of an ionizing solute dissolved in organic solvent. For example, the particular cells described herein preferably utilize a 1 M LiClO₄, 50/50 propylene carbonate/diglyme or glyme (by volume) electrolyte, that has a water content of less than about 50 ppm (even up to 100 ppm may be acceptable in some circumstances).

In accordance with this invention, relative to the type of cells already known and described above, it has been discovered that mixing a minor amount of secondary cathode material: Ag₂V₄O₁₁, δAgₓV₂O₅, or βAgₓV₂O₅, in any ratio with the selected primary cathode material (MnO₂ and/or CFₓ) extends time in a voltage interval near EOS i.e., capacity in a voltage interval near EOS. These additives provide a sloping voltage ramp of lower voltage than the MnO₂ and/or CFₓ primary cathode material alone.

The amount of secondary cathode material in the composite cathode generally depends upon the particular application of the cell, and how early in the life cycle of the cell it is necessary or desired to know that the cell capacity is falling or has been used up. For example, for a cell to be used in a medical device which has a short life expectancy and a widely varying current demand, it would be useful to know early in the life of the device if and when the reactive material in the cell was being used up rapidly, so that a replacement cell could be introduced in an orderly fashion. Such a cell would probably require a greater amount of secondary cathode material than, for instance, a cell in a device where the life expectancy was longer. In such circumstances, even a relatively small amount of secondary cathode material may produce an acceptable period of early warning for the need for a new cell.

In general, the secondary cathode material may be mixed with the primary cathode material over the entire possible composition range in order to provide the combination of properties desired i.e., to provide a fraction of dischargeable capacity within a specified voltage interval. If necessary or desired, more than one of the secondary cathode materials could be added to the composite cathode.

In one preferred form of the invention, a cell is provided having a lithium anode, a cathode of MnO₂ and one of the following compounds in minor amount: Ag₂V₄O₁₁, δAgₓV₂O₅, or βAgₓV₂O₅ as active components, a conductive component of carbon or graphite and a binder component such as PTFE. The latter two components are used to enhance performance of the battery. Carbon and/ or graphite increase conduction of the cathode and enhance rate capability. The binder holds the cathode together. The cell contains an electrolyte such as 50/50 diglyme/propylene carbonate 1M in LiClO₄ or other organic electrolyte capable of transporting lithium ions. The cell also contains suitable current collectors, preferably but not necessarily embedded in the electrodes, suitable separators e.g., microporous polyethylene or polypropylene and/or a layer of nonwoven polypropylene or polyethylene laminated to it, and a suitable case, preferably a hermetically sealed case of metal, preferably stainless steel and preferably sealed by welding. Feedthroughs of corrosion-resistant glass are typically used when the cell is sealed, as is known in the art, for electrical contact.

Another preferred form of the invention is a similar cell to that described above except a carbon monofluoride (CFₓ) cathode is used with any of the aforementioned cathode additives in a 2:1 stoichiometric capacity ratio of CFₓ to additive. Other possible ratios of CFₓ to additive such as the stoichiometric ratios of 3:1, 4:1, 1:1 for example may be used as well depending upon the application of the cell and/or the desired properties.

The invention may be illustrated in detail by the following non-limiting Examples, and by the following Figures, in which Figures. 1 - 2 are graphs showing the EOS characteristics of cells according to the Examples below of this invention; and Figures. 3 and 4 are curves of prior art cells for comparison purposes.

### Examples

Cells having a lithium anode, an electrolyte of 1M LiClO₄, 50/50 propylene carbonate/diglyme (by volume) and a water content of 15-44 ppm were prepared with the following composite cathodes, all having a 2:1 ratio of stoichiometric capacities of primary to secondary materials.

A. CFₓ + Ag₂V₄O₁₁

B. MnO₂ + Ag₂V₄O₁₁

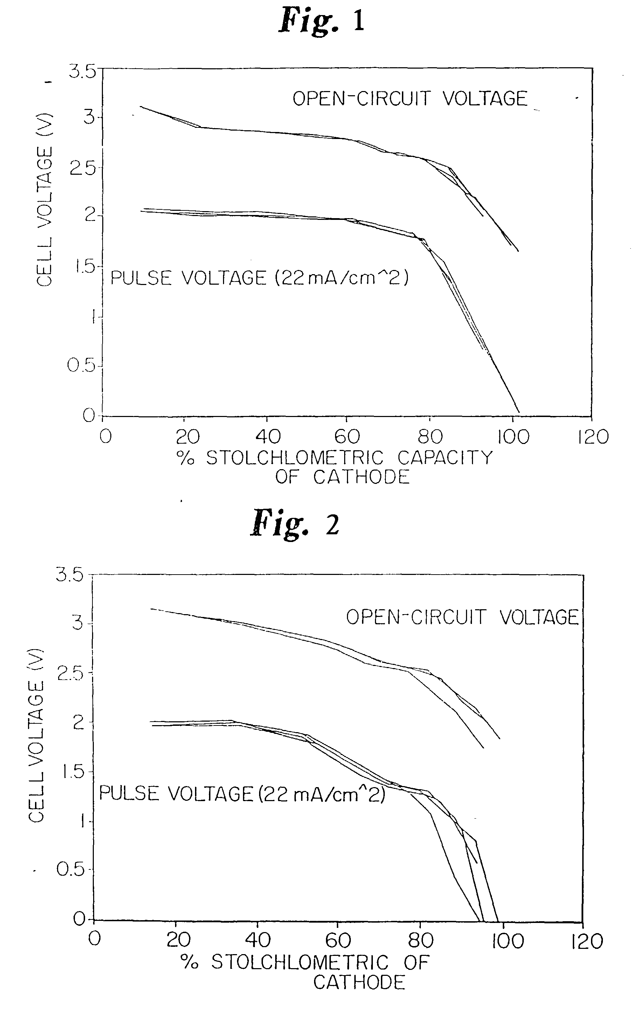

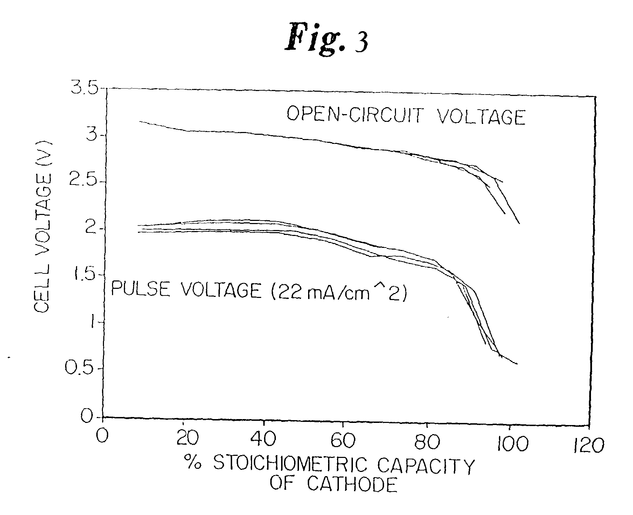

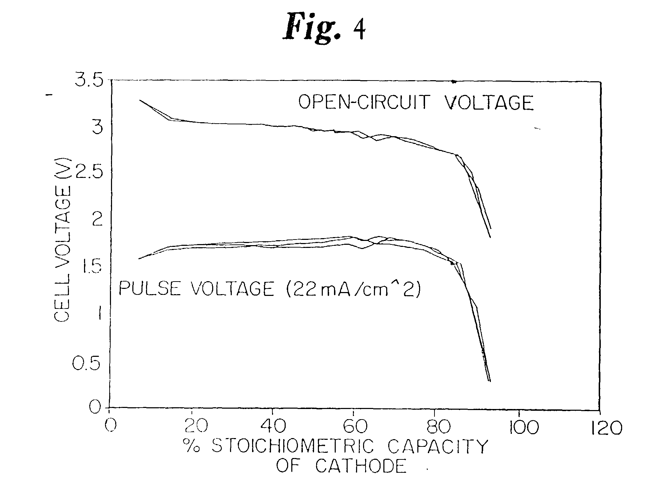

All of the cathodes included 5% by weight PTFE, 3% by weight carbon black and 3% by weight graphite. Pulsed discharge curves for A - B are shown in Figs. 1 - 2. Comparison discharge curves with only the primary cathode materials are shown in Figs. 3 and 4.

Similar cells were also built and tested with an electrolyte of 1M LiBF₄ in gamma-butyrolactone with similar results.

Preferred composite cathode compositions have approximate stoichiometric ratios of:
2:1 CFₓ : V₂O₅
4:1 CFₓ : V₂O₅
(Ratios are expressed in terms of the relative stoichiometric capacities provided by the ingredients.)

Background information regarding CFₓ may be found in "Graphite Fluorides and Carbon-Fluoride Compounds", T. Nakajima and N. Watanabe, CRC Press, 1991.

This completes the description of the preferred and alternate embodiments of the invention. Those skilled in the art may recognize other equivalents to the specific embodiment described herein which equivalents are intended to be encompassed by the claims attached hereto.

## Claims

1. A non-aqueous cell comprising:
(a) an active metal anode;
(b) a liquid organic electrolyte; and
(c) a composite cathode, the composite cathode comprising a mixture of a first material selected from manganese dioxide, carbon monofluoride and mixtures thereof and a second material selected from βAgₓV₂O₅, wherein x is about 0.29 ≤ x ≤ 0.41, δAgₓV₂O₅, wherein x is about 0.67 ≤ x ≤ 0.86 and Ag₂V₄O₁₁.

2. A cell as claimed in claim 1 wherein the active metal anode is lithium.

3. A cell as claimed in claim 1 or claim 2 wherein the cathode mixture comprises carbon monofluoride (CFₓ) and Ag₂V₄O₁₁.

4. A cell as claimed in any one of claims 1 to 3 comprising a conductivity enhancer and a binder in the cathode mixture.

5. A cell as claimed in claim 4 wherein the conductivity enhancer is a conductive carbon.

6. A cell as claimed in any preceding claim wherein the cathode mixture has a ratio of the first component to the second component (expressed in terms of stoichiometric capacity) of about 2:1.

7. A cell as claimed in any one of claims 1 to 5 wherein the cathode mixture has a ratio of the first component to the second component (expressed in terms of stoichiometric capacity) of about 4:1.

8. A cell as claimed in any one of the preceding claims wherein the liquid organic electrolyte is either a mixture of 1 M LiClO₄, 50/50 propylene carbonate/diglyme (by volume) and water in an amount of less than about 50 ppm, or LiBF₄ in gamma-butyrolactone.

## Revendications

1. Cellule non aqueuse comprenant:
(a) une anode en métal actif;
(b) un électrolyte organique liquide; et
(c) une cathode composite, la cathode composite comprenant un mélange d'un premier matériau sélectionné parmi le dioxyde de manganèse, le monofluorure de carbone et des mélanges de ceux-ci, et un second matériau sélectionné à partir de βAgₓV₂O₅ dans lequel x est d'environ 0,29 ≤ x ≤ 0,41, de δAgₓV₂O₅ dans lequel x est d'environ 0,67 ≤ x ≤ 0,86 et d'Ag₂V₄O₁₁.

2. Cellule selon la revendication 1, dans laquelle l'anode en métal actif est en lithium.

3. Cellule selon la revendication 1 ou la revendication 2, dans laquelle le mélange de la cathode comprend du monofluorure de carbone (CFₓ) et de l'Ag₂V₄O₁₁.

4. Cellule selon l'une quelconque des revendications 1 à 3, comprenant un élément d'amélioration de la conductivité et un liant, dans le mélange de cathode.

5. Cellule selon la revendication 4, dans laquelle l'élément d'amélioration de la conductivité est un carbone conducteur.

6. Cellule selon l'une quelconque des revendications précédentes, dans laquelle le mélange de cathode a un rapport, du premier composant au deuxième composant (exprimé en termes de capacité stoechiométrique), d'environ 2:1.

7. Cellule selon l'une quelconque des revendications 1 à 5, dans laquelle le mélange de cathode a un rapport, du premier composant au deuxième composant (exprimé en termes de capacité stoechiométrique), d'environ 4:1.

8. Cellule selon l'une quelconque des revendications précédentes, dans laquelle l'électrolyte organique liquide est, soit un mélange de 1M de LiClO₄, de 50/50 de carbonate de propylène/diglyme (par volume) et d'eau, dans une quantité inférieure à environ 50 ppm, soit du LiBF₄ dans du gamma-butyrolactone.

## Patentansprüche

1. Nicht-wäßrige Zelle, umfassend:
(a) eine aktive Metallanode,
(b) einen flüssigen organischen Elektrolyt, und
(c) eine Verbundkathode umfassend ein Gemisch aus einem ersten Stoff, ausgewählt aus Mangandioxid, Kohlenstoffmonofluorid und Gemischen davon, und einem zweiten Stoff, ausgewählt aus βAgₓV₂O₅ mit x etwa 0,29 ≤ x ≤ 0,41, δAgₓV₂O₅ mit x etwa 0,67 ≤ x ≤ 0,86, und Ag₂V₄O₁₁.

2. Zelle nach Anspruch 1, wobei die aktive Metallanode aus Lithium besteht.

3. Zelle nach Anspruch 1 oder 2, wobei das Kathodengemisch Kohlenstoffmonofluorid (CFₓ) und Ag₂V₄O₁₁ enthält.

4. Zelle nach einem der Ansprüche 1 bis 3, mit einem Leitfähigkeitsverstärker und einem Bindemittel in dem Kathodengemisch.

5. Zelle nach Anspruch 4, wobei der Leitfähigkeitsverstärker leitfähiger Kohlenstoff ist.

6. Zelle nach einem der vorhergehenden Ansprüche, wobei die erste und die zweite Komponente in dem Kathodengemisch in einem Verhältnis von etwa 2:1 (ausgedrückt gemäß der stöchiometrischen Kapazität) vorliegen.

7. Zelle nach einem der Ansprüche 1 bis 5, wobei die erste und die zweite Komponente in dem Kathodengemisch in einem Verhältnis von etwa 4:1 (ausgedrückt gemäß der stöchiometrischen Kapazität) vorliegen.

8. Zelle nach einem der vorhergehenden Ansprüche, wobei der flüssige organische Elektrolyt entweder ein Gemisch aus 1 M LiCℓO₄, 50/50 (Volumenteile) Propylencarbonat/Diglym und Wasser in einer Menge von weniger als etwa 50 ppm, oder LiBF₄ in Gamma-Butyrolacton ist.
